# EUROPEAN PATENT APPLICATION

(11) **EP 4 835 790 A1**
(43) Date of publication of application: **04.11.2026**
(21) Application number: 25758505.9
(22) Date of filing: 14.01.2025
(51) Int. Cl.: G06Q 30/02, G06F 16/955, G06F 16/909, G06Q 50/00

(54) **SYSTEM AND METHOD FOR DIRECT ACCESS SERVICE VIA MATCHING AREA**

(30) Priority: 20.02.2024 KR 20240024631
(71) Applicant: Altsoft, Inc., Seoul 06097 (KR)
(72) Inventor: KIM, Chan Hong, Seoul 06097 (KR)
(74) Representative: M. Zardi & Co S.A.
(86) International application number: PCT/KR2025/000765
(87) International publication number: WO 2025/178257

(57) **Abstract**

According to a system and a method for a direct access service via a matching area proposed herein, when a location button is selected on an application of a user terminal, a service server searches for the matching area corresponding to location information of the user terminal and provides a link pre-registered for the matching area, so that the user terminal directly accesses the link to directly output content corresponding to the matching area. Accordingly, a customer visiting the matching area, such as an offline store, may easily visit an online channel without separate actions such as searching or code scanning, and may have additional amusement in the process of visiting several online channels while moving through the matching areas.

## Description

### Technical Field

The present disclosure relates to a system and a method for a direct access service via a matching area. More particularly, the present disclosure relates to a system and a method for a direct access service that enables direct access to an online channel when entering a matching area.

### Background Art

The description in this section merely provides background information on one embodiment of the present disclosure and does not constitute the related art.

As small terminals such as smartphones and network technologies have developed, and anyone has become able to easily use online homepages, operation of online channels such as homepages and customer attraction have become more important than anything else. Regarding such online channels, in addition to conventional homepages, various types of social media, such as Instagram, YouTube, and blogs, and dedicated applications serve as online channels.

By using the above-described online channels, various types of information may be provided to customers and information may be continuously provided even out of an offline space such as a store. Therefore, in addition to promotion in an online space, various efforts have been made even in offline stores to induce store visitors to visit online channels. For example, online channels are introduced or QR codes for easy access thereto are provided in an offline space, and more actively, discounts, coupons, and gifts may be provided to those who have followed the online channels (following Instagram or subscribing to YouTube) or to homepage visitors.

However, no matter how actively the visit to the online channels is promoted in the offline stores, customers must perform actions such as searching for the online channels online or scanning the QR codes, and thus it is not easy to attract customers who consider such a process cumbersome. Accordingly, there is a need for development of a technology that can enable customers visiting an offline store to easily visit an online channel while providing amusement.

In the meantime, as a related art of the present disclosure, disclosed is Korean Patent No. 10-1937723 (Titled: VIRTUAL LOCAL BOX ADVERTISEMENT SERVICE SYSTEM IN WHICH BANNER ADVERTISEMENT IS DISPLAYED THROUGH VIRTUAL LOCAL BOX, registration date: 07 January 2019).

The above-described background technology is technical information that has been possessed by the present inventor in order to derive the present disclosure or which has been acquired in the process of deriving the present disclosure, and can not necessarily be regarded as well-known technology which has been known to the public prior to the filing of the present disclosure.

### Disclosure

### Technical Problem

The present disclosure has been made keeping in mind the above problems occurring in the previously proposed methods, and the present disclosure is directed to providing a system and a method for a direct access service via a matching area, wherein when a location button is selected on an application of a user terminal, a service server searches for a matching area corresponding to location information of the user terminal and provides a link pre-registered for the matching area, so that the user terminal directly accesses the link to directly output content corresponding to the matching area. Accordingly, a customer visiting the matching area, such as an offline store, may easily visit an online channel without separate actions such as searching or code scanning, and may have additional amusement in the process of visiting several online channels while moving through the matching area.

However, the objectives of the present disclosure are not limited thereto, and there may be other objectives. Even if not explicitly mentioned, the objectives or effects that can be understood from the solutions or embodiments are also objectives of the present disclosure.

### Technical Solution

In order to achieve the above objectives, according to an aspect of the present disclosure, there is provided a system for a direct access service via a matching area,
the system including:
a user terminal on which an application is run, the application providing a location button for directly accessing content corresponding to the matching area; and
a service server configured to search for the matching area corresponding to location information of the user terminal and provide a link pre-registered for the matching area as the location button is selected on the user terminal,
wherein the user terminal
is configured to directly access the link provided by the service server to output the content.

Preferably,
the service server may include:
a database in which setting information of the matching area and the link registered by an owner of the matching area are stored;
an area matching part configured to receive the location information from the user terminal on which the location button is selected, and search for the matching area including the received location information; and
a link providing part configured to search the database for the link pre-registered for the found matching area and provide the link to the user terminal.

More preferably, the area matching part may be configured to,
when there is a plurality of the matching areas including the location information of the user terminal, provide the user terminal with a list of the plurality of the matching areas.

Even more preferably, the user terminal may be configured to
output the list of the plurality of the matching areas provided by the area matching part, and receive a user's selection from the list.

Even more preferably, the link providing part may be configured to
provide the user terminal with the link pre-registered for the matching area selected by the user from the list of the plurality of the matching areas.

In order to achieve the above objectives, according to an aspect of the present disclosure, there is provided a method for a direct access service via a matching area,
the method performed in a system for the direct access service, wherein the system includes:
a user terminal on which an application is run, the application providing a location button for directly accessing content corresponding to the matching area; and
a service server configured to search for the matching area corresponding to location information of the user terminal and provide a link pre-registered for the matching area as the location button is selected on the user terminal, the method including:
   (1) selecting the location button on the user terminal;
   (2) searching for, by the service server, the matching area corresponding to the location information of the user terminal;
   (3) providing, by the service server, the link pre-registered for the matching area; and
   (4) directly accessing, by the user terminal, the link provided by the service server to output the content.

Preferably,
in the step (2), when there is a plurality of the matching areas including the location information of the user terminal, a list of the plurality of the matching areas may be provided to the user terminal,
the method may further include, between the steps (2) and (3),
(2-5) outputting, by the user terminal, the list of the plurality of the matching areas provided by the area matching part, and receiving a user's selection from the list, and
in the step (3), the user terminal may be provided with the link pre-registered for the matching area selected by the user from the list of the plurality of the matching areas.

### Advantageous Effects

According to the system and the method for the direct access service via the matching area proposed in the present disclosure, when the location button is selected on the application of the user terminal, the service server searches for the matching area corresponding to the location information of the user terminal and provides the link pre-registered for the matching area, so that the user terminal directly accesses the link to directly output the content corresponding to the matching area. Accordingly, a customer visiting the matching area, such as an offline store, can easily visit an online channel without separate actions such as searching or code scanning, and can have additional amusement in the process of visiting several online channels while moving through the matching areas.

Furthermore, various useful advantages and effects of the present disclosure are not limited to the above-described contents, and will be more easily understood in the process of describing specific embodiments of the present disclosure.

### Description of Drawings

FIG. 1 is a diagram illustrating the configuration of a system for a direct access service via a matching area according to an embodiment of the present disclosure.
FIG. 2 is a diagram illustrating an example in which a user has entered a matching area in a system for a direct access service via a matching area according to an embodiment of the present disclosure.
FIG. 3 is a diagram illustrating an example in which a direct access service is implemented on a user terminal, in a system for a direct access service via a matching area according to an embodiment of the present disclosure.
FIG. 4 is a diagram illustrating the detailed configuration of a service server, in a system for a direct access service via a matching area according to an embodiment of the present disclosure.
FIG. 5 is a diagram illustrating an example of a structure of a database storing setting information of matching areas and links in correspondence with each other, in a system for a direct access service via a matching area according to an embodiment of the present disclosure.
FIG. 6 is a diagram illustrating an example in which there is a plurality of matching areas including location information of a user terminal, in a system for a direct access service via a matching area according to an embodiment of the present disclosure.
FIG. 7 is a diagram illustrating an example in which a direct access service is implemented on a user terminal when a plurality of matching areas is found, in a system for a direct access service via a matching area according to an embodiment of the present disclosure.
FIG. 8 is a diagram illustrating the flow of a method for a direct access service via a matching area according to an embodiment of the present disclosure.
FIG. 9 is a diagram illustrating the flow including step S125 added when a plurality of matching areas is found, in a method for a direct access service via a matching area according to an embodiment of the present disclosure.

### <Description of the Reference Numerals in the Drawings>

10: matching area
100: user terminal
200: service server
210: database
220: area matching part
230: link providing part
S110: selecting location button on user terminal
S120: searching for, by service server, matching area corresponding to location information of user terminal
S125: outputting, by user terminal, list of plurality of matching areas provided by area matching part, and receiving user's selection from list
S130: providing, by service server, link pre-registered for matching area
S140: directly accessing, by user terminal, link provided by service server to output content

### Best Mode

Hereinafter, embodiments of the present disclosure will be described in detail with reference to the accompanying drawings such that the present disclosure can be easily embodied by those skilled in the art to which the present disclosure belongs. However, the present disclosure may be embodied in various different forms and should not be limited to the embodiments set forth herein. Further, in order to clearly explain the present disclosure, portions that are not related to the present disclosure are omitted in the drawings, and like reference numerals designate like elements throughout the specification.

Throughout the specification, when a part is referred to as being "connected" to another part, it includes not only being "directly connected", but also being "indirectly connected" by interposing the other part therebetween. In addition, terms such as "comprising", "including", and "having" described below should be interpreted as specifying the existence of features, numbers, steps, operations, elements, components, or combinations thereof described in the specification, and should be understood as not precluding in advance the possibility that one or more other features, numbers, steps, operations, elements, components, or combination thereof may exist or may be added. In addition, expression in the singular form used in the present disclosure includes expression in the plural form, unless the context clearly indicates otherwise.

In addition, the elements, processes, steps, or methods included in the embodiments of the present disclosure may be shared as long as they do not technically conflict with each other.

Also, the terms "~ part", "~ unit", and "module" mean a unit for processing at least one function or operation and may be implemented by a combination of hardware and/or software.

In addition, part of the operations or functions described as being performed by a terminal, apparatus, or device in the present disclosure may be performed instead by a server connected to the terminal, apparatus, or device. Similarly, part of the operations or functions described as being performed by the server may be performed by the terminal, apparatus, or device connected to the server.

In particular, the means for executing a system according to each embodiment of the present disclosure may be an application or a web server. Examples of a terminal that is the means for reading a recording medium on which the application or the web server is recorded may include general PCs, such as general desktop and laptop computers, and mobile terminals, such as smartphones and tablet PCs.

The embodiments described hereinafter are detailed descriptions of the present disclosure to facilitate understanding of the present disclosure and are not intended to limit the scope of the present disclosure. Thus, subject matter having the same scope and performing the same function as that of the present disclosure also falls within the scope of the present disclosure.

Hereinafter, embodiments of the present disclosure will be described in detail with reference to the accompanying drawings.

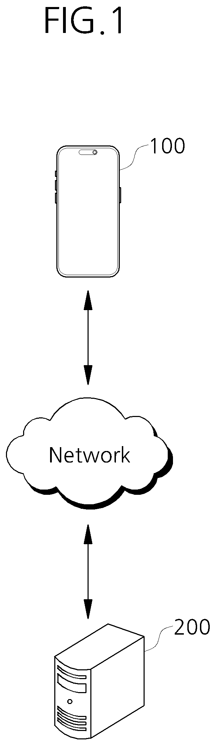

FIG. 1 is a diagram illustrating the configuration of a system for a direct access service via a matching area according to an embodiment of the present disclosure. As shown in FIG. 1, a system for a direct access service via a matching area according to an embodiment of the present disclosure is a system for a direct access service. The system includes: a user terminal 100 on which an application is run, the application providing a location button for directly accessing content corresponding to the matching area; and a service server 200 configured to search for the matching area corresponding to location information of the user terminal 100 and provide a link pre-registered for the matching area as the location button is selected on the user terminal 100. Herein, the user terminal 100 may directly access a link provided by the service server 200 to output content.

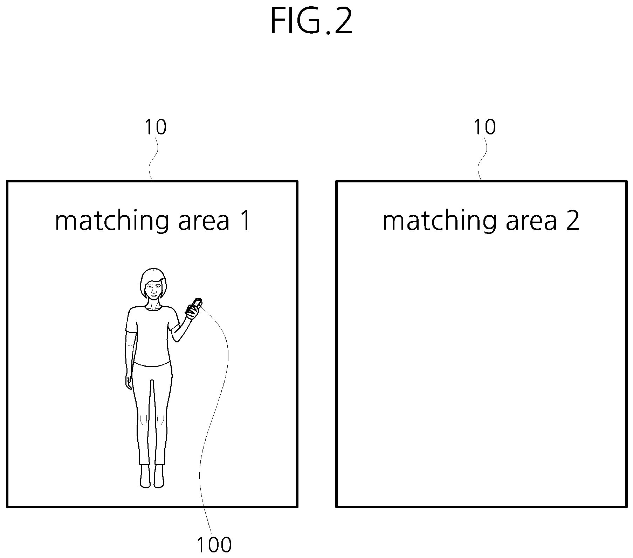

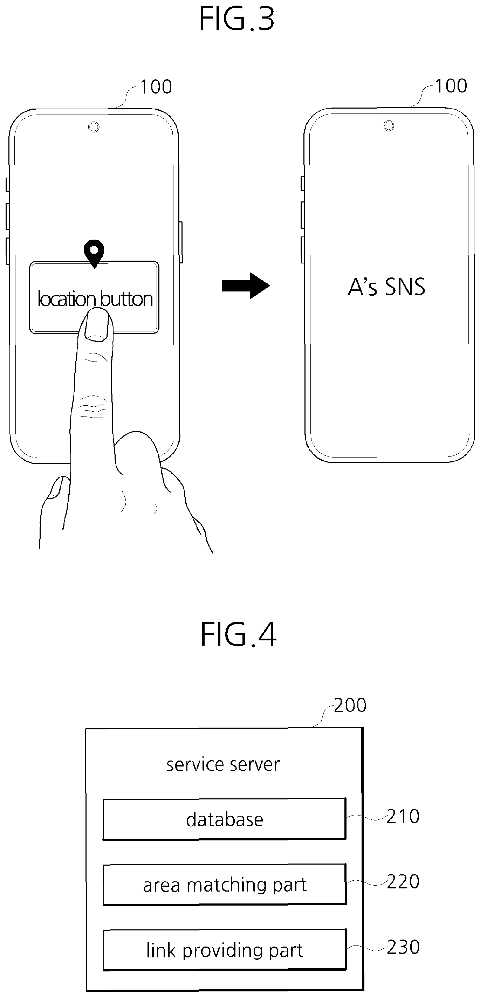

FIG. 2 is a diagram illustrating an example in which a user has entered a matching area 10 in a system for a direct access service via a matching area 10 according to an embodiment of the present disclosure. FIG. 3 is a diagram illustrating an example in which a direct access service is implemented on a user terminal 100, in a system for a direct access service via a matching area 10 according to an embodiment of the present disclosure.

A user enters the matching area 10 with the user terminal 100 as shown in FIG. 2, and the user may run an application on the user terminal 100 and select a location button presented on an initial screen of the application as shown in FIG. 3. Then, the service server 200 may search for the matching area 10 corresponding to the location information of the user terminal 100, and provide a link pre-registered for the matching area 10 so that the user terminal 100 directly accesses the link to output content corresponding to the matching area 10. As a result, as shown in FIG. 3, when the user touches only the location button on the user terminal 100, an SNS of A, which is content corresponding to the matching area 10 including the current user location, may be immediately output.

Herein, the matching area 10 may be diverse, such as an area inside or outside an offline store or an area inside a shopping mall, and may be a plaza, a park, an outdoor observatory, an entrance to a hiking trail, a private garden, or a private forest, where there is no store or building but traffic of people exists. Herein, the service server 200 may set the matching area 10, or a store manager or an owner (local creator) of the matching area 10 may set the matching area 10. For example, the service server 200 may automatically set the matching area 10, and if necessary, the store manager or the owner of the matching area 10 may reset the matching area 10. According to an embodiment, the matching area 10 may be leased from an owner of a building, a plaza, or a park, and a specific person's channel may be directly accessed in the matching area 10. That is, an owner of a building, a store, a plaza, or a park may lease the matching area 10 to the service server 200 or a third party, such as a local creator (store manager). When the matching area 10 is leased, a user located within the matching area 10, such as the building or store, may directly access a channel or an advertisement automatically set by the third party, which is a lessee, or the service server 200.

In addition, a corresponding link may be registered in advance in each matching area 10, and the link may be connected to an online channel (content), such as a homepage, social media, Instagram, YouTube, or a blog, of an owner (or a manager or a lessee) of the matching area 10. Accordingly, a customer visiting the matching area 10, such as an offline store, may easily visit an online channel without separate actions such as searching or code scanning, and may have additional amusement in the process of visiting several online channels while moving through the matching areas 10. Herein, when one local creator (an owner, a manager, or a lessee of the matching area 10) owns several channels, such as a blog, a website, Instagram, and YouTube, a plurality of channels may be linked to the matching area 10 of the local creator.

In the meantime, the user terminal 100 may be implemented as an electronic device used by a user. Herein, examples of the electronic device may include at least one of the following: a smartphone, a tablet personal computer (PC), a mobile phone, a video phone, an e-book reader, a personal digital assistant (PDA), a media box, a game console, an electronic dictionary, and a wearable device. Examples of the wearable device may include at least one of the following: an accessory type (e.g., a watch, ring, bracelet, anklet, necklace, glasses, contact lens, or a head-mounted device (HMD)), a fabric or clothing-integrated type (e.g., electronic clothing), a body-attachable type (e.g., a skin pad or tattoo), and an implantable circuit. In various embodiments, the electronic device is not limited to the aforementioned devices, and may be a combination of two or more of the aforementioned various devices.

In addition, an application for providing a location button may be run on the user terminal 100. Herein, the application is an application program installed and run on a mobile device, and may provide a location button on the initial screen when the application is run. According to an embodiment, when the user terminal 100 enters the matching area 10, the application may provide a push notification to induce the user to select the location button.

FIG. 4 is a diagram illustrating the detailed configuration of a service server 200, in a system for a direct access service via a matching area 10 according to an embodiment of the present disclosure. As shown in FIG. 4, the service server 200 of the system for a direct access service via a matching area 10 according to an embodiment of the present disclosure may include a database 210, an area matching part 220, and a link providing part 230.

The database 210 may store setting information of a matching area 10 and a link registered by an owner of the matching area 10. Herein, the matching area 10 and the link may be set and registered by a store manager. A store manager may set and own a matching area 10, and according to an embodiment, matching areas 10 of several owners may overlap each other.

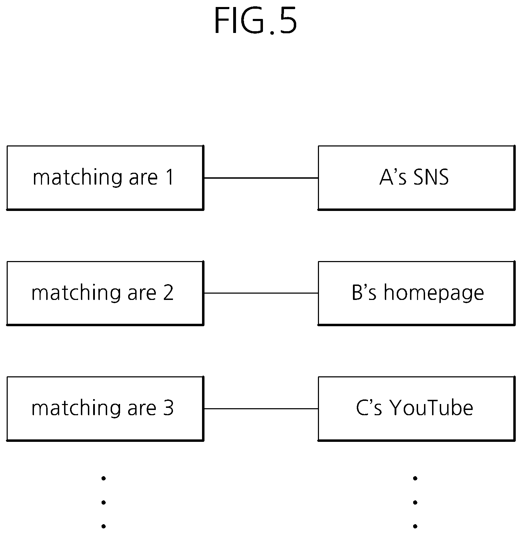

FIG. 5 is a diagram illustrating an example of a structure of a database 210 storing setting information of matching areas 10 and links in correspondence with each other, in a system for a direct access service via a matching area 10 according to an embodiment of the present disclosure. As shown in FIG. 5, the database 210 of the system for a direct access service via a matching area 10 according to an embodiment of the present disclosure may store a matching area 10 and a link in correspondence with each other through linkage. Herein, a link may be an online channel operated by an owner or a manager of each matching area 10. That is, in FIG. 5, matching area 1 is the matching area 10 owned by A, and A's SNS link may be registered in correspondence with matching area 1. In addition, matching areas 2 and 3 may be matching areas 10 owned by B and C, respectively, and B's homepage and C's YouTube link may be registered in correspondence with matching areas 2 and 3, respectively. Herein, a plurality of links may be stored in correspondence with each matching area 10. For example, when an owner, a manager, or a lessee of a matching area 10 operates several channels, all links connected to respective channels are registered for the matching area 10, so that a plurality of links may be stored in correspondence with a single matching area 10.

The area matching part 220 may receive location information from the user terminal 100 on which the location button is selected, and search for the matching area 10 including the received location information. That is, when the user is located within the matching area 10 carrying the user terminal 100 as shown in FIG. 2 and touches the location button on the application as shown in FIG. 3, the user terminal 100 may transmit the location information to the service server 200. The area matching part 220 may use the location information of the user terminal 100 to search for the matching area 10 corresponding thereto. Herein, the location information of the user terminal 100 may use GPS or a mobile communication network, or may use precise location information based on ultra-wideband (UWB).

The link providing part 230 may search the database 210 for a link pre-registered for the found matching area 10, and provide the found link to the user terminal 100. That is, as shown in FIG. 5, the link providing part 230 may search the database 210, which stores matching areas 10 and links in correspondence with each other, for the link and provide the link to the user terminal 100. The user terminal 100 may directly access the link provided by the service server 200 to output content.

Therefore, the user may directly access content (an online channel) merely by entering the matching area 10, which provides convenience. Through this, an owner or a manager of the matching area 10 may increase inflow of customers to the online channel. In addition, when matching areas 10 are set inside and outside offline stores for each store in a shopping mall, a user moves between the matching areas 10 merely by walking through the shopping mall, and each time the user touches the location button on the application, the user may have amusement of being connected to online channels of different stores.

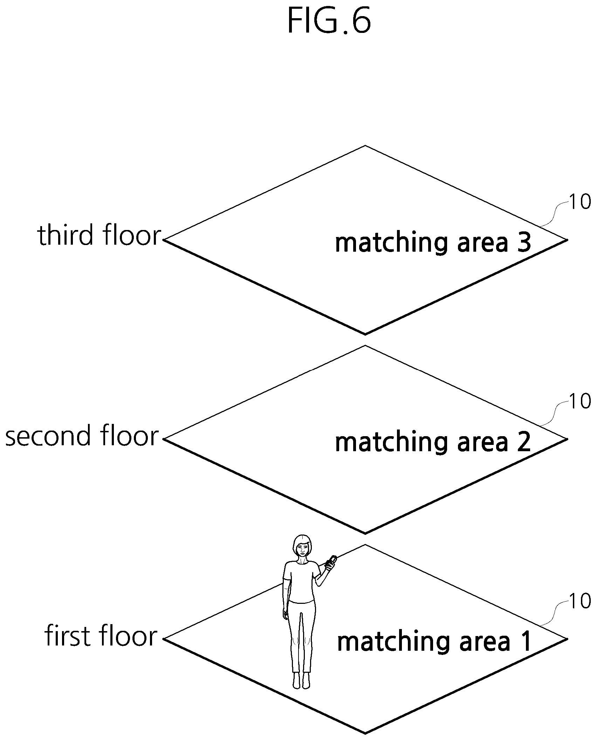

In the meantime, there may be a plurality of matching areas 10 including location information when at least some of the matching areas 10 overlap or when the location information of the user terminal 100 does not include information on each floor in a multi-story shopping mall. FIG. 6 is a diagram illustrating an example in which there is a plurality of matching areas 10 including location information of a user terminal 100, in a system for a direct access service via a matching area 10, according to an embodiment of the present disclosure. That is, if matching areas 10 are set on the first, second, and third floors, respectively, all of matching areas 1, 2, and 3 may be found as the matching area 10 including location information of the user terminal 100 even when the user is on the first floor.

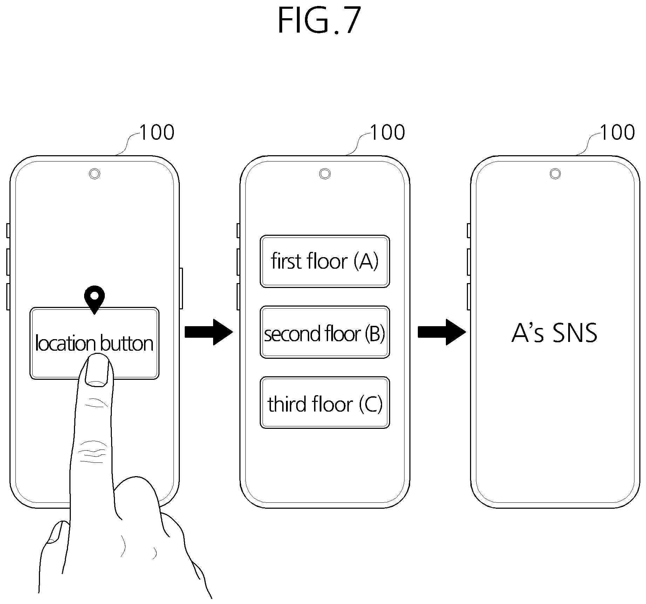

FIG. 7 is a diagram illustrating an example in which a direct access service is implemented on a user terminal 100 when a plurality of matching areas 10 is found, in a system for a direct access service via a matching area 10 according to an embodiment of the present disclosure. As shown in FIGS. 6 and 7, in the system for a direct access service via a matching area 10 according to an embodiment of the present disclosure, when there is a plurality of matching areas 10 including the location information of the user terminal 100, the area matching part 220 may provide a list of the plurality of matching areas 10 to the user terminal 100. The user terminal 100 may output the list of the plurality of matching areas 10 provided by the area matching part 220, and may receive the user's selection from the list. The link providing part 230 may provide the user terminal 100 with a link pre-registered for the matching area 10 selected by the user from the list of the plurality of matching areas 10. That is, as shown in FIG. 7, when the user touches the location button on the application and a plurality of matching areas 10 is found, a list of the plurality of matching areas 10 is displayed. When the user selects one from the list (for example, selecting the first floor (A)), the user may directly access an SNS link of A corresponding to matching area 1 and the corresponding content may be output.

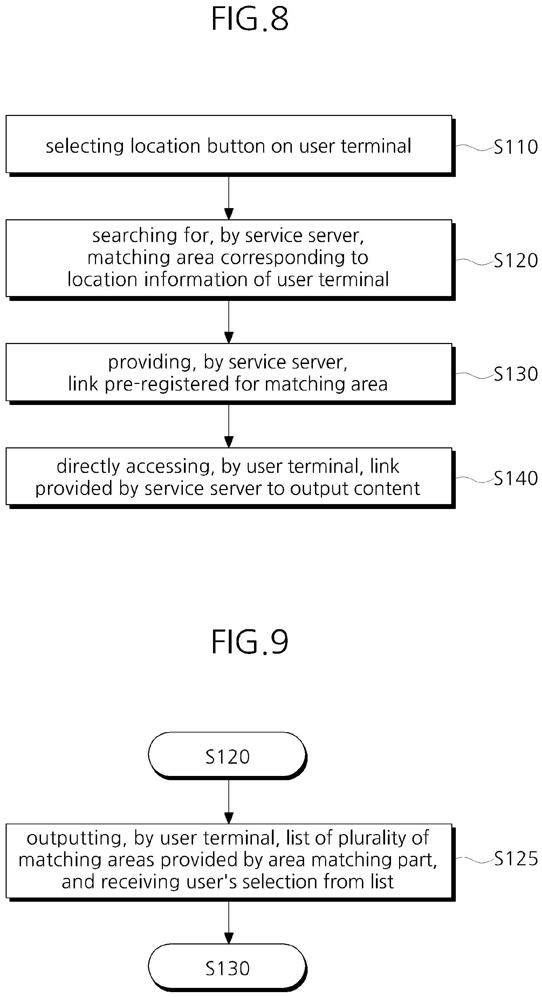

FIG. 8 is a diagram illustrating the flow of a method for a direct access service via a matching area 10 according to an embodiment of the present disclosure. As shown in FIG. 8, a method for a direct access service via a matching area 10 according to an embodiment of the present disclosure is performed in the system for the direct access service, and may be implemented including: selecting the location button on the user terminal 100 in step S110; searching for, by the service server 200, the matching area 10 corresponding to the location information of the user terminal 100 in step S120; providing, by the service server 200, the link pre-registered for the matching area 10 in step S130; and directly accessing, by the user terminal 100, the link provided by the service server 200 to output the content in step S140.

FIG. 9 is a diagram illustrating the flow including step S125 added when a plurality of matching areas 10 is found, in a method for a direct access service via a matching area 10 according to an embodiment of the present disclosure. As shown in FIG. 9, the method for a direct access service via a matching area 10 according to an embodiment of the present disclosure may further include, between steps S120 and S130, outputting, by the user terminal 100, the list of the plurality of the matching areas 10 provided by the area matching part 220, and receiving the user's selection from the list in step S125. Accordingly, a situation in which a plurality of matching areas 10 is found may be implemented.

Details of each of the steps have been sufficiently described in relation to the above-described system for a direct access service via a matching area 10 according to an embodiment of the present disclosure, so a detailed description thereof will be omitted.

As described above, according to the system and the method for the direct access service via the matching area 10 proposed in the present disclosure, when the location button is selected on the application of the user terminal 100, the service server 200 searches for the matching area 10 corresponding to the location information of the user terminal 100 and provides the link pre-registered for the matching area 10, so that the user terminal 100 directly accesses the link to directly output the content corresponding to the matching area 10. Accordingly, a customer visiting the matching area 10, such as an offline store, may easily visit an online channel without separate actions such as searching or code scanning, and may have additional amusement in the process of visiting several online channels while moving through the matching areas 10.

In the meantime, the present disclosure may include a computer-readable recording medium including program instructions for performing operations implemented by various communication terminals. Examples of the computer-readable recording medium include magnetic recording media such as hard disks, floppy disks and magnetic tapes; optical data storage media such as CD-ROMs or DVD-ROMs; magneto-optical media such as floptical disks; and hardware devices, such as read-only memory (ROM), random-access memory (RAM), and flash memory, which are particularly structured to store and implement the program instruction.

The computer-readable recording medium may include program instructions, data files, and data structures either separately or in combination. Herein, the program instructions recorded in the computer-readable medium may be those particularly designed and configured to implement the present disclosure, or the program instructions may be those known and available to those skilled in the art of computer software. For example, the program instructions may include machine language codes, which are created by a compiler, as well as high-level language codes, which may be executed by a computer by using an interpreter.

The foregoing description of the present disclosure is intended for exemplifications, and it will be understood by those skilled in the art that the present disclosure may be easily modified in other specific forms without changing the technical idea or essential features of the present disclosure. Therefore, it should be understood that the embodiments described above are illustrative in all aspects and not restrictive. For example, each element described as a single type may be implemented in a distributed manner, and likewise elements described as distributed may be implemented in a combined form.

The scope of the present disclosure is characterized by the appended claims rather than the detailed description described above, and it should be construed that all alterations or modifications derived from the meaning and scope of the appended claims and the equivalents thereof fall within the scope of the present disclosure.

## Claims

1. A system for a direct access service via a matching area (10), the system comprising:
a user terminal (100) on which an application is run, the application providing a location button for directly accessing content corresponding to the matching area (10); and
a service server (200) configured to search for the matching area (10) corresponding to location information of the user terminal (100) and provide a link pre-registered for the matching area (10) as the location button is selected on the user terminal (100),
wherein the location button is provided on an initial screen when the application is run, or is provided through a push notification of the user terminal (100),
the user terminal (100) is configured to directly access the link provided by the service server (200) to output the content, and
the service server (200) includes:
a database (210) in which setting information of the matching area (10) and the link registered by an owner of the matching area (10) are stored;
an area matching part (220) configured to receive the location information from the user terminal (100) on which the location button is selected, and search for the matching area (10) including the received location information; and
a link providing part (230) configured to search the database (210) for the link pre-registered for the found matching area (10) and provide the link to the user terminal (100).

2. The system of claim 1, wherein the area matching part (220) is configured to, when there is a plurality of the matching areas (10) including the location information of the user terminal (100), provide the user terminal (100) with a list of the plurality of the matching areas (10).

3. The system of claim 2, wherein the user terminal (100) is configured to output the list of the plurality of the matching areas (10) provided by the area matching part (220), and receive a user's selection from the list.

4. The system of claim 3, wherein the link providing part (230) is configured to provide the user terminal (100) with the link pre-registered for the matching area (10) selected by the user from the list of the plurality of the matching areas (10).

5. A method for a direct access service via a matching area (10), the method performed in a system for the direct access service, wherein the system includes: a user terminal (100) on which an application is run, the application providing a location button for directly accessing content corresponding to the matching area (10); and a service server (200) configured to search for the matching area (10) corresponding to location information of the user terminal (100) and provide a link pre-registered for the matching area (10) as the location button is selected on the user terminal (100),
the method comprising:
(1) selecting the location button on the user terminal (100);
(2) searching for, by the service server (200), the matching area (10) corresponding to the location information of the user terminal (100);
(3) providing, by the service server (200), the link pre-registered for the matching area (10); and
(4) directly accessing, by the user terminal (100), the link provided by the service server (200) to output the content,
wherein the location button is provided on an initial screen when the application is run, or is provided through a push notification of the user terminal (100), and
the service server (200) includes:
a database (210) in which setting information of the matching area (10) and the link registered by an owner of the matching area (10) are stored;
an area matching part (220) configured to receive the location information from the user terminal (100) on which the location button is selected, and search for the matching area (10) including the received location information; and
a link providing part (230) configured to search the database (210) for the link pre-registered for the found matching area (10) and provide the link to the user terminal (100).

6. The method of claim 5, wherein in the step (2), when there is a plurality of the matching areas (10) including the location information of the user terminal (100), a list of the plurality of the matching areas (10) is provided to the user terminal (100),
the method further comprises, between the steps (2) and (3), (2-5) outputting, by the user terminal (100), the list of the plurality of the matching areas (10) provided by the area matching part (220), and receiving a user's selection from the list, and
in the step (3), the user terminal (100) is provided with the link pre-registered for the matching area (10) selected by the user from the list of the plurality of the matching areas (10).
